# EUROPÄISCHE PATENTSCHRIFT

(11) **EP 0 471 044 B1**
(45) Veröffentlichungstag und Bekanntmachung des Hinweises auf die Patenterteilung: **09.03.1994**
(21) Anmeldenummer: 91902983.5
(22) Anmeldetag: 05.02.1991
(51) Int. Cl.: B62D 5/06, F15B 21/00, F16L 55/027

(54) **DEHNSCHLAUCH ZUR VERRINGERUNG VON DRUCKPULSATIONEN**
EXTENSIBLE HOSE FOR REDUCING PRESSURE PULSES
TUYAU EXTENSIBLE DESTINE A REDUIRE LES PULSATIONS DE PRESSION

(30) Priorität: 06.03.1990 CH 711/90
(43) Veröffentlichungstag der Anmeldung: 19.02.1992
(73) Patentinhaber: INGENIEURBURO H.LÜTHIN AG, CH-5430 Wettingen (CH); TECHNOCHEMIE KESSLER & CO. GMBH, 61184 Karben (DE)
(72) Erfinder: ZIMMERMANN, Otto, D-6000 Frankfurt/Main (DE); VON STEHT, Günter, D-6940 Weinheim (DE)
(74) Vertreter: Troesch Scheidegger Werner AG
(86) Internationale Anmeldenummer: CH9100028
(87) Internationale Veröffentlichungsnummer: WO9113790

(56) Entgegenhaltungen:
- EP-A- 0 150 044
- DE-C- 968 116
- GB-A- 2 054 041

## Beschreibung

Die Erfindung betrifft einen Dehnschlauch zur Verringerung von in Hydrauliksystemen von der Pumpe ausgelösten Druckpulsationen und damit verbundenen Geräuschen. Dehnschläuche dieser Art werden in Servolenkungsanlagen von Kraftfahrzeugen eingesetzt, in denen der Dehnschlauch bei unterschiedlichen Arbeitsdrücken mit Änderung des Schlauchvolumens durch Dehnung reagiert und dadurch die von der Pumpe ausgehenden Druckpulsationen und Geräusche verringert. Diese Reduzierung der Druckpulsationen und Geräusche hängt von der Länge, dem Querschnitt und der Volumendehnung des Dehnschlauches ab. Da man jedoch bei einem Kraftfahrzeug wegen des knappen zur Verfügung stehenden Platzes für den Einbau des Dehnschlauches dessen Dimensionierung nicht beliebig wählen kann, ist das erzielte Ergebnis in vielen Fällen nicht befriedigend.

Um bessere Ergebnisse zu erzielen, ist es bereits bekannt aus der DE-OS 33 39 876, in dem äusseren Dehnschlauch einen weiteren in neren flexiblen Schlauch anzuordnen, der einerseits an das einlassseitige Endstück angeschlossen ist und mit seinem anderen offenen Ende im äusseren Dehnschlauch frei endet. Dabei kann es jedoch wegen der nicht kontrollierbaren Lage der beiden Schläuche zu einer Beschädigung an der Innenseite des äusseren Dehnschlauches kommen, was Ursache für einen nicht sofort feststellbaren Defekt sein kann. Um eine weitere Verbesserung zu erreichen, ist es ferner auch bekannt, zusätzlich etwa auf der Mitte des äusseren Dehnschlauches ein einen axialen Drosseldurchlass aufweisendes Drosselglied vorzusehen, welches den äusseren Dehnschlauch in zwei durch den Drosseldurchlass miteinander in Verbindung stehende Schlauchkammern unterteilt, wobei der Innenschlauch im Bereich der einlassseitigen ersten Schlauchkammer radiale Durchlässe aufweist. Der Strömungswiderstand im Innenschlauch soll dabei zu einer Phasenverschiebung zwischen den beiden Hydraulikströmen in der einlassseitigen und auch durch Rückstrom des Druckmediums aus der Lenkungsseite in die auslassseitige Schlauchkammer führen, womit eine Pulsations- und Geräuschreduzierung erzielt wird.

Die vorstehend erwähnten, bekannten Lösungsvarianten genügen jedoch nicht immer zur Erreichung des angestrebten Ziels, inbezug auf die Geräuschdämpfung und Pulsationsreduzierung bei einem Fahrzeug den höchsten Komfortansprüchen gerecht zu werden.

Der Erfindung lag daher die Aufgabe zugrunde, einen Dehnschlauch der im Oberbegriff des Anspruchs 1 genannten Art weiter zu verbessern, damit von der Pumpe ausgelöste Druckpulsationen auch in Extremfällen nicht mehr als Geräusch wahrgenommen werden können. Diese Aufgabe wird durch einen Dehnschlauch mit den Merkmalen gemäss Anspruch 1 gelöst. Es hat sich gezeigt, dass eine bereits einlassseitige Aufteilung des Druckmediums in einen in den Ringraum zwischen äusserem Druckschlauch und inneren Hohlkörper gelangenden Teilstrom und einen weiteren in den inneren Hohlkörper direkt gelangenden Teilstrom in Kombination mit dem weiteren Merkmal des bis in das auslassseitige Endstück sich hineinerstreckenden inneren Hohlkörpers besonders gute Resultate erzielen lässt, wobei in weiterer zweckmässiger Ausgestaltung der äussere Druckschlauch zusätzlich auch noch mit einem bisher bekannten, axiale Drosseldurchlässe aufweisenden Drosselglied versehen sein kann, durch welches der Druckschlauch in Kammern unterteilt ist.

Ein Ausführungsbeispiel des Erfindungsgegenstandes wird nachfolgend anhand der Zeichnungen näher erläutert. Es zeigen:
Fig. 1 einen Längsschnitt durch eine erste Ausführungsform des Dehnschlauches;
Fig. 2 eine in Bezug auf das einlassseitige Endstück abgewandelte Ausführungsform eines abgebrochen dargestellten Dehnschlauchs.

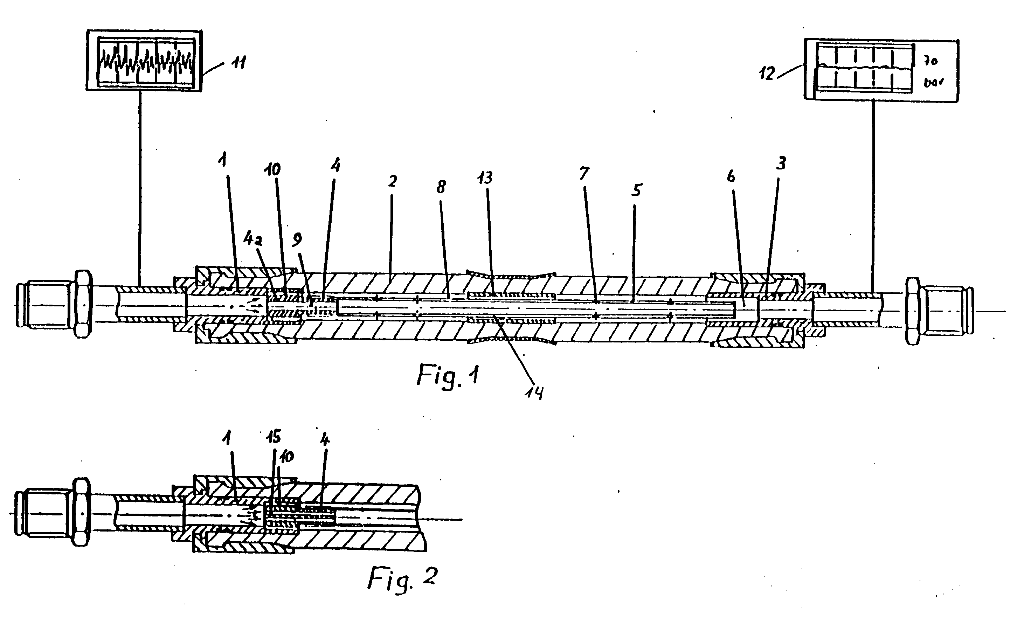

Bei dem Dehnschlauch gemäss Fig. 1 ist an ein einlassseitiges Endstück 1 ein äusserer Druckschlauch 2 angeschlossen, der eine hohe Volumenquerdehnung aufweist und der an seinem anderen Ende mit einem auslassseitigen Endstück 3 fest verbunden ist. Das einlassseitige Endstück 1 ist ferner mit einem Nippelzapfen 4 fest verbunden, an welchen ein innerer flexibler Hohlkörper 5 angeschlossen ist, der sich koaxial zu dem äusseren Druckschlauch 2 durch diesen hindurch erstreckt und der ein flexibles Rohr oder ein Schlauch oder auch ein schraubenlinienförmig gewickelter Materialstrang sein kann. Dieser flexible Hohlkörper 5 erstreckt sich mit seinem Endbereich frei in den Auslasskanal 6 des auslassseitigen Endstücks 3 hinein und sein Aussendurchmesser ist kleiner als der ihn umschliessende Auslasskanal 6, wodurch zwischen diesen ein ringförmiger Spalt vorhanden ist. Der innere flexible Hohlkörper 5 weist ferner über seine gesamte Länge in axialen Abständen verteilt angeordnete radiale Durchlassöffnungen 7 auf, durch welche hindurch das Druckmedium in den Ringraum 8 zwischen dem äusseren Druckschlauch 2 und dem inneren flexiblen Hohlkörper 5 gelangt.

Der Nippelzapfen 4 weist im Zentrum einen axialen Durchlass 9 auf, durch den hindurch das Druckmedium in den inneren flexiblen Hohlkörper 5 strömt. Der vordere Teil 4a des Nippelzapfens 4 ist als schraubenkopfartiger Sechskantkörper ausgebildet, der in eine zylindrische Bohrung des einlassseitigen Endstücks 1 eingepresst ist. Dadurch ergeben sich zwischen dieser Bohrung und dem äusseren Umfang des Sechskantkörpers eine Mehrzahl von umfangsmässig gleichmässig verteilt angeordneten Durchlässen 10, durch die hindurch das Druckmedium gedrosselt in den Ringraum 8 zwischen dem äusseren Druckschlauch 2 und dem inneren flexiblen Hohlkörper 5 strömt. Die Kombination der vorstehend beschriebenen Merkmale, nämlich die als Drossel wirkenden Durchlässe 10 in den Ringraum 8, die in dem flexiblen Hohlkörper 5 vorhandenen radialen Durchlassöffnungen 7 in den Ringraum 8 und der sich bis in den Auslasskanal 6 des auslassseitigen Endstücks 3 sich hineinerstreckende innere flexible Hohlkörper 5, führt zu einem sehr guten Ergebnis hinsichtlich der Reduzierung der Druckpulsationen und der Geräuschentwicklung, was in Fig. 1 durch zwei grafische Darstellungen 11 und 12 an der Einlasseite und der Auslassseite des Dehnschlauches verdeutlicht ist, welche eine stark schwankende Drucklinie an der Einlassseite und eine weitgehend egalisierte Drucklinie an der Auslassseite bei einem Arbeitsdruck von 70 bar erkennen lassen.

In bevorzugter Ausgestaltung weist der Dehnschlauch gemäss Fig. 1 etwa auf der Längsmitte noch ein Drosselglied 13 mit einem axialen Drosseldurchlass 14 auf, durch welchen das Druckmedium gedrosselt von der ersten in die zweite Kammer innerhalb des durch das Drosselglied in Kammern unterteilten Dehnschlauches gelangt.

Bei einer abgewandelten Ausführungsform gemäss Fig. 2 wird das Druckmedium einlassseitig zusätzlich noch weiter dadurch gedrosselt, dass in die axiale Bohrung 9 des Nippelzapfens 4 ein weiterer Sechskantkörper 15 eingepresst ist, durch den eine Mehrzahl von umfangsmässig gleichmässig verteilt angeordneten axialen Durchlässen gebildet wird.

## Patentansprüche

1. Dehnschlauch zur Verringerung von in Hydrauliksystemen von der Pumpe ausgelösten Druckpulsationen und damit verbundenen Geräuschen, insbesondere für Servolenkungsanlagen von Kraftfahrzeugen, mit einem an ein einlassseitiges Endstück (1) und ein auslassseitiges Endstück (3) angeschlossenen äusseren Druckschlauch (2) mit hoher Volumenquerdehnung und einem koaxial zu diesem angeordneten, zum Leiten eines Druckmediums geeigneten inneren flexiblen Hohlkörper (5), der einlassseitig an einen Nippelzapfen (4) angeschlossen ist, dadurch gekennzeichnet, dass der Nippelzapfen (4) axiale Durchlässe (9,10) in das Innere des flexiblen Hohlkörpers (5) und in den Ringraum (8) zwischen Hohlkörper (5) und Druckschlauch (2) aufweist und dass der innere flexible Hohlkörper (5) sich bis in das auslassseitige Endstück (3) in dessen Auslasskanal (6) frei hineinerstreckt und sein Aussendurchmesser kleiner ist als der ihn umschliessende Auslasskanal (6).

2. Dehnschlauch nach Anspruch 1, dadurch gekennzeichnet, dass der Nippelzapfen (4) als Drosselelement einen zentrischen axialen Durchlass (9) zum inneren Hohlkörper (5) sowie im radialen Abstand vom Zentrum umfangsmässig gleichmässig verteilt angeordnete Durchlassöffnungen (10) zum Ringraum (8) zwischen dem äusseren Druckschlauch (2) und dem inneren Hohlkörper (5) aufweist.

3. Dehnschlauch nach Anspruch 2, dadurch gekennzeichnet, dass ein Teil (4a) des Nippelzapfens (4) als schraubenkopfartiger Sechskantkörper mit einer axialen Bohrung (9) ausgebildet ist, der in eine Bohrung des einlassseitigen Endstücks (1) eingepresst ist.

4. Dehnschlauch nach Anspruch 3, dadurch gekennzeichnet, dass in die axiale Bohrung (9) des als Sechskantkörper ausgebildeten Teils (4a) des Nippelzapfens (4) ein weiterer Sechskantkörper (15) zwecks Bildung einer Mehrzahl von axialen Durchlässen zum inneren flexiblen Hohlkörper (5) eingepresst ist.

5. Dehnschlauch nach Anspruch 1, dadurch gekennzeichnet, dass der innere flexible Hohlkörper (5) als flexibles Rohr oder Schlauch mit über die Länge verteilt angeordneten radialen Durchlassöffnungen (7) ausgebildet ist.

6. Dehnschlauch nach einem der vorhergehenden Ansprüche, dadurch gekennzeichnet, dass der innere flexible Hohlkörper (5) aus einem schraubenlinienförmig gewikkelten Materialstrang mit druckabhängiger Längendehnfähigkeit zwecks Variierung der Spaltengrösse zwischen den Materialstrangwindungen besteht.

7. Dehnschlauch nach Anspruch 1, dadurch gekennzeichnet, dass der Druckschlauch (2) zusätzlich mit mindestens einem einen axialen Drosseldurchlass (14) aufweisenden Drosselglied (13) versehen ist, durch welches der Druckschlauch in mehrere Kammern unterteilt ist.

## Claims

1. Expanding hose for reducing pressure pulses, and noises associated therewith, generated by the pump in hydraulic systems, especially for power steering systems of motor vehicles, having an outer pressure hose (2) of high volume transverse expansion that is connected to an inlet-side end piece (1) and to an outlet-side end piece (3), and, arranged coaxially therewith, an inner flexible hollow body (5) suitable for conducting a pressure medium, which hollow body (5) is connected on the inlet side to a nipple (4), characterised in that the nipple (4) has axial passageways (9, 10) leading into the interior of the flexible hollow body (5) and into the annular space (8) between the hollow body (5) and the pressure hose (2), and the inner flexible hollow body (5) extends freely until it enters the outlet channel (6) of the outlet-side end piece (3) and its outer diameter is smaller than the outlet channel (6) surrounding it.

2. Expanding hose according to claim 1, characterised in that the nipple (4) has as a throttle element a central axial passageway (9) leading to the inner hollow body (5) and, spaced radially from the centre, openings (10) leading to the annular space (8) between the outer pressure hose (2) and the inner hollow body (5), which openings (10) are distributed uniformly around the circumference.

3. Expanding hose according to claim 2, characterised in that a portion (4a) of the nipple (4) is constructed in the form of a bolt-head-like hexagonal body having an axial bore (9), which has been forced into a bore in the inlet-side end piece (1).

4. Expanding hose according to claim 3, characterised in that a further hexagonal body (15) has been forced into the axial bore (9) in the portion (4a) of the nipple (4) that is constructed in the form of a hexagonal body, for the purpose of forming a plurality of axial passageways leading to the inner flexible hollow body (5).

5. Expanding hose according to claim 1, characterised in that the inner flexible hollow body (5) is constructed in the form of a flexible tube or hose having radial openings (7) arranged distributed over its length.

6. Expanding hose according to any one of the preceding claims, characterised in that the inner flexible hollow body (5) consists of a helically wound rope of material capable of pressure-dependent longitudinal expansion for the purpose of varying the size of the gap between the windings of the rope of material.

7. Expanding hose according to claim 1, characterised in that the pressure hose (2) is additionally provided with at least one throttle member (13) which has an axial throttle passageway (14) and by means of which the pressure hose is divided into several chambers.

## Revendications

1. Tuyau extensible pour réduire des pulsations de pression déclenchées dans des systèmes hydrauliques par la pompe et des bruits liés à celles-ci, notamment pour des dispositifs de direction assistée dans des véhicules automobiles, avec un tuyau de refoulement extérieur (2) raccordé à un tronçon d'extrémité côté entrée (1) et un tronçon d'extrémité côté sortie (3), avec une dilatation transversale de volume élevée et un corps creux flexible interne (5) disposé coaxialement à celui-ci, approprié pour conduire un fluide sous pression, qui est raccordé côté entrée à un téton (4), caractérisé en ce que le téton (4) présente des passages axiaux (9, 10) dans l'intérieur du corps creux flexible (5) et dans l'espace annulaire (8) entre le corps creux (5) et le tuyau de refoulement (2), et en ce que le corps creux flexible interne (5) s'étend librement jusque dans le tronçon d'extrémité côté sortie (3) dans le canal de sortie (6) de celui-ci, et que son diamètre extérieur est plus petit que le canal de sortie (6) qui l'entoure.

2. Tuyau extensible selon la revendication 1, caractérisé en ce que le téton (4) comme élément d'étranglement présente un passage axial au centre (9) vers le corps creux interne (5) ainsi que des ouvertures de passage (10) réparties régulièrement sur le pourtour suivant un espacement radial du centre vers l'espace annulaire (8) entre le tuyau de refoulement extérieur (2) et le corps creux intérieur (5).

3. Tuyau extensible selon la revendication 2, caractérisé en ce qu'une partie (4a) du téton (4) est réalisée comme corps à six pans sous forme de tête à boulon avec un perçage axial (9) qui est enfoncé dans un perçage du tronçon d'extrémité côté entrée (1).

4. Tuyau extensible selon la revendication 3, caractérisé en ce qu'on insère par pression dans le perçage axial (9) de la partie réalisée sous forme de corps à six pans (4a) du téton (4) un autre corps à six pans (15) pour former une pluralité de passages axiaux vers le corps creux flexible interne (5).

5. Tuyau extensible selon la revendication 1, caractérisé en ce que le corps creux flexible interne (5) est réalisé sous forme de tube ou tuyau flexible avec des ouvertures de passage radiales (7) réparties sur la longueur.

6. Tuyau extensible selon l'une des revendications précédentes, caractérisé en ce que le corps creux flexible interne (5) est constitué d'un boudin de matériau enroulé suivant une forme hélicoïdale avec une capacité de dilatation longitudinale qui est fonction de la pression pour faire varier la grandeur de fente entre les spires du boudin de matériau.

7. Tuyau extensible selon la revendication 1, caractérisé en ce que le tuyau de refoulement (2) est pourvu de plus d'au moins un organe d'étranglement (13) présentant un passage axial d'étranglement (14) par lequel le tuyau de refoulement est divisé en plusieurs chambres.
